# EUROPÄISCHE PATENTSCHRIFT

(11) **EP 1 703 616 B1**
(45) Veröffentlichungstag und Bekanntmachung des Hinweises auf die Patenterteilung: **03.09.2008**
(21) Anmeldenummer: 06001899.1
(22) Anmeldetag: 31.01.2006
(51) Int. Cl.: H02K 5/136

(54) **Vorrichtung für den Schutz von Elektromotoren**
Protection device for electric motor
Dispositif de protection pour moteur électrique

(30) Priorität: 15.03.2005 DE 102005012250
(43) Veröffentlichungstag der Anmeldung: 20.09.2006
(73) Patentinhaber: Bosch Rexroth AG, 70184 Stuttgart (DE)
(72) Erfinder: Gröning, Ingolf, Dr., 97816 Lohr am Main (DE); Schelbert, Johannes, 97794 Rieneck (DE)

(56) Entgegenhaltungen:
- DE-A1- 2 635 553
- DE-A1- 3 420 393
- DE-A1- 3 804 602
- DE-A1- 10 145 521
- K.FALK, K.HOFBAUER: "Explosionsgeschützte Elektromotoren" 2004, VDE VERLAG GMBH , BERLIN ISSN: 0506-6719 ISBN: 3-8007-2783-8 * Seite 21 - Seite 27 * * Seite 29 - Seite 42 * * Seite 63 - Seite 66 *

## Beschreibung

Die Erfindung betrifft eine Vorrichtung für den Explosionsschutz von Elektromotoren oder ähnlichen elektrischen Geräten, wie Pumpen, bei denen der Motor ein Schutzgehäuse aufweist und mit einem mit ihm gekoppelten, in einem Schutzgehäuse untergebrachten Messwertgeber zusammenarbeitet.

Solche elektrischen Geräte, insbesondere Motoren, müssen für verschiedene Umgebungsbereiche einen Schutz gegen Explosionen aufweisen, damit Personen und Objekte vor Beschädigung geschützt werden. Für Elektromotoren sind gemäß der DIN-Norm EN 50014 verschiedene Schutzklassen für verschiedene Umgebungsbereiche vorgeschrieben, beispielsweise die niedrige Schutzklasse ex-p und die benachbarte, höhere Schutzklasse ex-d. Der Messwertgeber kann
zu verschiedenen Zwecken dienen, beispielsweise zur Positionsinformation für den Motor an sich bzw. für den Rotor, zur Regelung der Drehgeschwindigkeit des Motors usw.

Die Schutzklasse ex-p schreibt vor, dass das Motorschutzgehäuse und das Geberschutzgehäuse nur überdruckfest auszubilden sind, wobei geeignete Spülmaßnahmen durchgeführt werden müssen. Die überdruckfest ausgebildeten Schutzgehäuse müssen dabei mit Spülöffnungen versehen sein, an die sowohl für das Motorschutzgehäuse als auch für das Geberschutzgehäuse jeweils ein eigener, überwachter Spülkreislauf mit einer Überwachungsvorrichtung und einem Spülgerät angeschlossen ist.

Die Schutzklasse ex-d schreibt vor, dass das Motorschutzgehäuse und das Geberschutzgehäuse druckfest auszubilden sind, wobei der Messwertgeber selbst explosionsfest ausgeführt sein muss. Wenn in diesen Schutzgehäusen ein zündfähiges Gasgemisch explodiert, müssen die Schutzgehäuse so druckbelastbar sein, dass sie der Explosion im Inneren standhalten, ohne dass ein zündfähiges Gasgemisch außerhalb dieser Schutzgehäuse gezündet wird. Spülkreisläufe sind hier nicht erforderlich.

In der Schutzklasse ex-p werden somit zwei Spülkreisläufe mit den entsprechenden Vorrichtungen und ein explosionsgeschützter Geber erforderlich, wodurch erhebliche Kosten für den Schutz aufgewandt werden müssen. In der Schutz-klasse ex-d werden hochwertige Schutzgehäuse und ebenfalls ein explosionsgeschützter Geber erforderlich, so dass ebenfalls erhebliche Kosten für den Schutz entstehen.

Aus der DE 34 20 393 A1 ist ein Gleichstrommotor für Gewinnungsmaschinen des Untertagebaus bekannt. Dieser Motor weist einen Bürstenraum und einen Bremsenraum auf, die gegeneinander hermetisch abgeschlossen sind wobei auf diese beiden Räume unterschiedliche Schlagwetterschutzbestimmungen anwendbar sind.

Die DE 38 04 602 A1 beschreibt einen explosionsgeschützten Spaltrohrmotor. Dieser Motor ist gekapselt ausgeführt, wobei im Bereich der Radialgleitlagerspalte eine Explosionsschutzspalte angeordnet ist und als Zuström- und Abflussöffnung für die Schmier und Kühlflüssigkeit dient.

Die Aufgabe der Erfindung besteht darin, eine Schutzvorrichtung gemäß dem Oberbegriff des Anspruchs 1 zu schaffen, bei der ein zuverlässiger Explosionsschutz mit möglichst geringem Kostenaufwand erreicht wird.

Diese Aufgabe wird mit den Merkmalen des Anspruchs 1 gelöst. Hierbei ist vorgesehen, dass das Motorschutzgehäuse und Geberschutzgehäuse für verschieden hohe Schutzklassen ausgebildet sind, wobei für das Motorschutzgehäuse die niedrigere Schutzklasse und für das Geberschutzgehäuse die höhere Schutz-klasse vorgesehen ist und die Schutzvorrichtung für die niedrigere Schutzklasse vorgesehen ist, **wobei das Motorschutzgehäuse überdruckfest ausgebildet und mit Spülbohrungen versehen ist und das Geberschutzgehäuse druckfest ohne Spüleinrichtung ausgebildet ist.**

Damit sind nur ein relativ preisgünstiges Motorschutzgehäuse mit nur einem Spülkreislauf und ein druckfestes Geberschutzgehäuse erforderlich, wobei ein preisgünstiger Standartmesswertgeber einsetzbar ist.

Gemäß einer weiteren, vörteilhaften Ausbildung der Erfindung ist das Geberschutzgehäuse mit Spalten zum Abbau einer Explosionswelle versehen.

Gemäß einer weiteren vorteilhaften Ausbildung der Erfindung ist das Geberschutzgehäuse mit dem Messwertgeber außen am Motorschutzgehäuse angeordnet.

Gemäß einer alternativen vorteilhaften Ausbildung der Erfindung ist das Geberschutzgehäuse mit dem Messwertgeber im Inneren des Motorschutzgehäuses angeordnet.

Eine weitere vorteilhafte Maßnahme für einen preisgünstigen Aufbau besteht darin, dass als Messwertgeber ein einfacher Standartgeber eingesetzt ist, der an sich keine Explosionsschutzvorkehrungen aufweist.

Zu einer zuverlässigen Funktion tragen die Maßnahmen bei, dass an die Spülbohrungen ein überwachter Spülmittelkreislauf mit einer Überwachungsvorrichtung und einem Spülgerät angeschlossen ist.

Die Erfindung wird nun anhand von Ausführungsbeispielen näher erläutert. Es zeigen:
Fig. 1 eine Prinzipdarstellung einer Schutzvorrichtung für einen Elektromotor mit daran angeordnetem Messwertgeber nach einem der ersten Ausführungsbeispiele der Erfindung und
Fig. 2 eine Prinzipdarstellung einer Schutzvorrichtung für einen Elektromotor mit daran angeordneten Messwertgeber nach einem weiteren Ausführungsbeispiel der Erfindung.

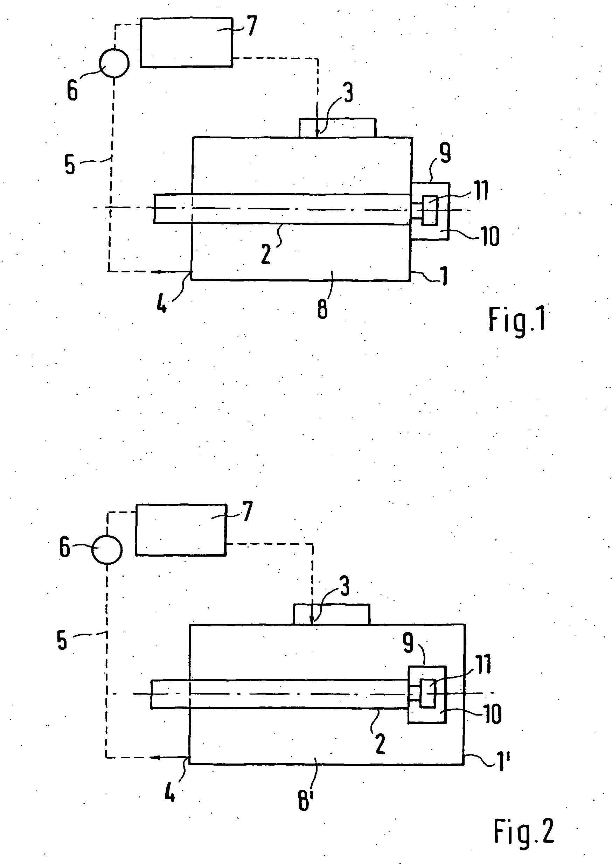

In Fig. 1 ist ein Schutzgehäuse 1 für einen Elektromotor 2, das auch der. Stator dieses Motors selbst sein kann, mit Spülbohrungen 3, 4 versehen. An diese Spülbohrungen 3, 4 ist ein Spülkreislauf 5 angeschlossen, in dem eine Überwachungsvorrichtung 6 und ein Spülgerät 7 angeordnet sind. Das Spülgerät 7 kann eine Pressluftquelle umfassen, die die Pressluft durch das Schutzgehäuse 1 leitet. Das Schutzgehäuse 1 braucht nur so druckfest ausgebildet sein, dass es den Pressluftdruck aushält. Zu diesem Zweck braucht das Schutzgehäuse 1 keine aufwändige Ausführung zu sein. Die Überwachungsvorrichtung 6 misst die Temperatur der aus dem Schutzgehäuse 1 kommenden Abluft und regelt danach die Menge der dem Schutzgehäuse 1 zugeführten Frischluft. Das Spülgerät 7 und die Überwachungsvorrichtung 6 liegen außerhalb des explosionsgefährdeten Umgebungsbereichs. Die Spülung findet in dem ex-p-gekapselten Raum 8 statt.

An dem Schutzgehäuse 1 bzw. an dem Motor 2 ist ein Geberschutzgehäuse 9 mit einem ex-d-gekapselten Raum 10 befestigt, der gegen den ex-p-gekapselten Raum 8 abgedichtet ist. Das Geberschutzgehäuse 9 ist ein kleines, stabiles Gehäuse, das druckfest ausgebildet ist. Es ist in nicht dargestellter Weise mit bekannten Spalten versehen. Das Geberschutzgehäuse 9 und die Spalte sind derart ausgebildet, dass das Geberschutzgehäuse 9 eine Explosion innerhalb des Raums 10 aushält, wobei die Spalte dafür sorgen, dass sich die Explosionswelle totläuft. Innerhalb des Geberschutzgehäuses 9 ist ein Messwertgeber 11 angeordnet, der mit der Motorwelle gekoppelt ist. Der Messwertgeber 11 ist vorteilhaft eine einfache und preiswerte Standardausführung, die an sich nicht für die Erfordernisse eines Explosionsschutzes ausgelegt zu sein braucht.

In Fig. 2 ist eine zweite Ausführung' der Schutzvorrichtung gemäß der Erfindung für einen Elektromotor 2 gezeigt. Das Schutzgehäuse 1' mit dem angeschlossenen Spülkreislauf ist ähnlich wie in Fig. 1 ausgebildet. Ebenfalls ähnlich zur Fig. 1 ist das Geberschutzgehäuse 9 mit dem Messwertgeber 11 ausgebildet. Unter-schiedlich ist, dass das Geberschutzgehäuse 9 innerhalb des Schutzgehäuses 1' in dem ex-p-gekapselten Raum 8' angeordnet ist.

## Patentansprüche

1. Vorrichtung für den Explosionsschutz von Elektromotoren oder ähnlichen elektrischen Geräten, wie Pumpen, bei denen der Motor ein Schutzgehäuse aufweist und mit einem mit ihm gekoppelten, in einem eigenen Schutzgehäuse untergebrachten Messwertgeber zusammenarbeitet, wobei das Motorschutzgehäuse (1, 1') und das Geberschutzgehäuse (9) für verschieden hohe Schutzklassen ausgebildet sind,
**dadurch gekennzeichnet, dass**
für das Motorschutzgehäuse (1, 1') die niedrigere Schutzklasse (ex-p) und für das Geberschutzgehäuse (9) die höhere Schutzklasse (ex-d) vorgesehen ist und die **Vorrichtung für den Explosionsschutz von Elektromotoren** für die niedrigere Schutzklasse (ex-p) vorgesehen ist, **wobei das Motorschutzgehäuse (1, 1') überdruckfest ausgebildet und mit Spülbohrungen (3, 4) versehen ist und das Geberschutzgehäuse (9) druckfest ohne Spülbohrungen ausgebildet ist.**

2. Vorrichtung nach Anspruch 1 oder 2,
**dadurch gekennzeichnet,**
**dass** das Geberschutzgehäuse (9) mit Spalten zum Abbau einer Explosionswelle versehen ist.

3. Vorrichtung nach einem der vorhergehenden Ansprüche,
**dadurch gekennzeichnet,**
**dass** das Geberschutzgehäuse (9) mit dem Messwertgeber außen am Motorschutzgehäuse (1) angeordnet ist,

4. Vorrichtung nach einem der Ansprüche 1 bis 3,
**dadurch gekennzeichnet,**
**dass** das Geberschutzgehäuse (9) mit dem Messwertgeber im Inneren des Motorschutzgehäuses (1') angeordnet ist.

5. Vorrichtung nach einem der vorhergehenden Ansprüche,
**dadurch gekennzeichnet,**
**dass** als Messwertgeber (11) ein einfacher Standardgeber eingesetzt ist, der an sich keine Explosionsschutzvorrichtung aufweist.

6. Vorrichtung nach einem der vorhergehenden Ansprüche
**dadurch gekennzeichnet,**
**dass** an die Spülbohrungen (3,4) ein überwachter Spülmittelkreislauf (5) mit einer Überwachungsvorrichtung und einem Spülgerät (7) angeschlossen ist.

## Claims

1. Explosion protection device for electric motors or similar electrical equipment, such as pumps, in which the motor has a protective housing and cooperates with a measuring sensor accommodated in a dedicated protective housing and coupled to said motor, the motor protective housing (1, 1') and the sensor protective housing (9) being designed for protection classes of different levels, **characterized in that** the lower protection class (ex-p) is provided for the motor protective housing (1, 1'), and the higher protection class (ex-d) is provided for the sensor protective housing (9), and the **explosion protection device for electric motors** is provided for the lower protection class (ex-p), **the motor protective housing (1, 1') being designed to be overpressure-resistant and being provided with purge holes (3, 4), and the sensor protective housing (9) being designed to be pressure-resistant without purge holes.**

2. Device according to Claim 1 or 2, **characterized in that** the sensor protective housing (9) is provided with gaps for extinguishing an explosion wave.

3. Device according to one of the preceding claims, **characterized in that** the sensor protective housing (9) is arranged with the measuring sensor on the outside of the motor protective housing (1).

4. Device according to one of Claims 1 to 3, **characterized in that** the sensor protective housing (9) is arranged with the measuring sensor in the interior of the motor protective housing (1').

5. Device according to one of the preceding claims, **characterized in that** a simple standard sensor which does not have an explosion protection device per se is used as measuring sensor (11).

6. Device according to one of the preceding claims, **characterized in that** a monitored purging agent circuit (5) having a monitoring device and a purging unit (7) is connected to the purge holes (3, 4).

## Revendications

1. Dispositif antidéflagrant pour des moteurs électriques ou appareils électriques analogues tels que des pompes, selon lequel le moteur comporte un boîtier protecteur et coopère avec un capteur de valeur de mesure couplé au moteur et logé dans son propre boîtier protecteur,
le boîtier protecteur du moteur (1, 1') et le boîtier protecteur du capteur (9) sont réalisés pour des classes de protection de niveaux différents,
**caractérisé en ce que**
le boîtier de protection du moteur (1, 1') correspond à la classe de protection de niveau le plus bas (ex-p) et le boîtier de protection du capteur (9) correspond à la classe de protection de niveau le plus élevé (ex-d), et le dispositif est prévu pour la protection antidéflagration de moteurs électriques pour la classe de protection de niveau le plus bas (ex-p),
le boîtier de protection du moteur (1, 1') étant réalisé de façon à résister à une surpression et il comporte des perçages de rinçage (3, 4), et le boîtier de protection de capteur (9) sans perçages de rinçage est résistant à la pression.

2. Dispositif selon la revendication 1,
**caractérisé en ce que**
le boîtier de protection de capteur (9) comporte des fentes pour atténuer une onde d'explosion.

3. Dispositif selon les revendications précédentes,
**caractérisé en ce que**
le boîtier de protection de capteur (9) est installé avec le capteur de valeur de mesure à l'extérieur sur le boîtier de protection du moteur (1).

4. Dispositif selon les revendications 1 à 3,
**caractérisé en ce que**
le boîtier protecteur du capteur (9) est installé avec le capteur de valeur de mesure à l'intérieur du boîtier de protection du moteur (1').

5. Dispositif selon les revendications précédentes,
**caractérisé en ce que**
le capteur de valeur de mesure (11) est un simple capteur usuel qui ne comporte pas de dispositif antidéflagration.

6. Dispositif selon les revendications précédentes,
**caractérisé en ce qu'**
un circuit d'agent de rinçage (5), contrôlé, muni d'un dispositif de contrôle et d'un appareil de rinçage (7) est raccordé au perçage de rinçage (3, 4).
